# FASCICULE DE BREVET EUROPEEN

(11) **EP 1 651 503 B1**
(45) Date de publication et mention de la délivrance du brevet: **07.11.2007**
(21) Numéro de dépôt: 04767559.0
(22) Date de dépôt: 02.07.2004
(51) Int. Cl.: B62D 21/15, B62D 25/08

(54) **LONGERON DEFORMABLE POUR VEHICULE AUTOMOBILE**
VERFORMBARER LÄNGSTRÄGER FÜR EIN KRAFTFAHRZEUG
DEFORMABLE SIDE RAIL FOR A MOTOR VEHICLE

(30) Priorité: 24.07.2003 FR 0309064
(43) Date de publication de la demande: 03.05.2006
(73) Titulaire: RENAULT S.A.S., 92100 Boulogne Billancourt (FR)
(72) Inventeur: DUGUET, Eric, F-75009 Paris (FR)
(74) Mandataire: Guyon, Rodolphe C.
(86) Numéro de dépôt international: PCT/FR2004/001718
(87) Numéro de publication internationale: WO 2005/019014

(56) Documents cités:
- FR-A- 2 490 563
- FR-A- 2 809 072
- PATENT ABSTRACTS OF JAPAN vol. 2003, no. 03, 5 mai 2003 (2003-05-05) & JP 2002 337726 A (TOYOTA MOTOR CORP), 27 novembre 2002 (2002-11-27)
- PATENT ABSTRACTS OF JAPAN vol. 2003, no. 01, 14 janvier 2003 (2003-01-14) & JP 2002 255059 A (MAZDA MOTOR CORP), 11 septembre 2002 (2002-09-11)

## Description

La présente invention se rapporte à un longeron déformable pour véhicule automobile.

Les longerons d'un véhicule automobile s'étendent longitudinalement par paire dans le compartiment moteur en bordant latéralement le groupe moteur de manière à constituer des points de fixation pour le supporter.

En outre, ils présentent une partie avant qui est reliée à l'habitacle du véhicule par une partie arrière. Cette partie arrière prolonge des éléments d'appui adaptés à maintenir lesdits longerons de manière rigide par rapport à la structure du véhicule.

Cependant, en cas de choc frontal, compte tenu de cette rigidité, les longerons risquent de pénétrer longitudinalement dans l'habitacle et de mettre en danger ses occupants.

Dans le but d'éviter une telle intrusion, il a été imaginé de ménager une amorce de pliage du longeron entre la partie avant et la partie arrière qui permet, en cas de choc, le pliage de la partie avant et de la partie arrière, l'une par rapport à l'autre, dans une direction opposée au groupe moteur. On pourra notamment se référer au document FR 2 809 072 A qui décrit un tel longeron.

Afin que les deux parties soient entraînées et écartées du groupe moteur grâce à l'amorce de pliage, il est nécessaire de sur-dimensionner les appuis et de renforcer le longeron pour privilégier une seule direction de déformation, sans quoi le longeron pourrait très bien se plier vers l'intérieur et entraîner le déplacement du groupe moteur vers l'habitacle.

Un problème qui se pose et que vise à résoudre la présente invention, est alors de fournir un longeron qui soit adapté non seulement à être écarté du groupe moteur en cas de choc frontal, mais aussi qui ne nécessite pas le surdimensionnement de ses éléments d'appui, ce qui permettrait d'alléger significativement la structure du véhicule.

A cet effet, la présente invention propose un longeron pour véhicule automobile adapté à s'étendre dans un compartiment moteur en bordant latéralement le groupe moteur qu'il est adapté à supporter, ledit longeron présente une partie avant qui est reliée à l'habitacle dudit véhicule par une partie arrière et il comporte des moyens d'asservissement au pliage de ladite partie arrière par rapport à ladite partie avant dans une direction opposée audit groupe moteur, lorsque ladite partie avant est percutée longitudinalement ; lesdits moyens d'asservissement au pliage comprennent une pièce rigide en V, présentant deux ailes et une partie centrale en saillie à la jonction des deux ailes, adaptée à former rotule centrale, l'une des ailes étant solidaire de ladite partie avant et l'autre de ladite partie arrière, ladite partie centrale étant étendue en regard dudit longeron, sensiblement entre ladite partie avant et ladite partie arrière dans une direction opposée audit groupe moteur ; et ladite partie centrale est adaptée à entraîner à force ledit longeron pour plier ladite partie avant par rapport à ladite partie arrière dans une direction opposée audit groupe moteur lorsque le longeron est comprimé longitudinalement.

Ainsi, une caractéristique de l'invention réside dans la combinaison de la pièce rigide en V et du longeron auquel elle est fixée de façon à s'étendre selon la direction longitudinale dudit longeron, l'une des ailes étant reliée à ladite partie avant et l'autre à ladite partie arrière tandis que la partie centrale est disposée en regard dudit longeron et dans une direction opposée au groupe moteur. De la sorte, lorsque le longeron est comprimé longitudinalement au cours d'un choc frontal, la partie avant tend à être entraînée vers la partie arrière tandis que les deux ailes de la pièce rigide qui sont respectivement solidaires desdites parties se rapproche l'une de l'autre et la partie centrale autour de laquelle les deux ailes s'articulent, en appui contre le longeron, force son pliage dans une direction opposée au groupe moteur.

Avantageusement, lesdites ailes de ladite pièce rigide comportent respectivement une première et une seconde extrémités opposées à ladite partie centrale de ladite pièce rigide, la première extrémité étant reliée à ladite partie arrière et la seconde extrémité étant reliée à ladite partie avant. Ainsi, avant que le longeron ne soit déformé, les ailes de ladite pièce rigide sont totalement libres par rapport audit longeron et dès qu'un choc frontal se produit, l'amorçage de leur déplacement relatif n'est en rien gêné, et l'entraînement du longeron se produit toujours de la même façon vers l'extérieur du compartiment moteur.

En outre, afin d'asservir plus encore le pliage du longeron, lesdites extrémités sont, préférentiellement, inclinées par rapport auxdites ailes de façon que les jointures respectives entre lesdites ailes et lesdites extrémités soient adaptées à former respectivement, une première et une seconde rotules, lesdites extrémités inclinées s'étendant dans des directions opposées dans le prolongement l'une de l'autre.

Ainsi, les extrémités qui sont solidaires respectivement de la partie avant et de la partie arrière et par conséquent, sensiblement alignées, se rapproche l'une vers l'autre lors d'une compression longitudinale du longeron et les ailes qui pivotent entre elles autour de la partie centrale pivotent également respectivement par rapport aux extrémités autour desdites jointures. En outre, les extrémités qui se rapprochent l'une vers l'autre selon une droite moyenne qui les coupe toutes les deux provoquent l'écartement de ladite partie centrale par rapport à ladite droite moyenne, ce qui permet donc de forcer le longeron vers l'extérieur du compartiment moteur.

Selon un mode de mise en oeuvre de l'invention particulièrement avantageux, ladite seconde extrémité inclinée présente des portions de plus faible résistance mécanique adaptées à la rendre compressible longitudinalement. De la sorte, comme on l'expliquera plus en détail ci-après, le longeron présente des parties compressibles pour amortir un choc frontal, et ladite seconde extrémité qui est solidaire de l'une de ces parties doit pouvoir également se rétracter longitudinalement.

Par ailleurs, le longeron forme, de façon avantageuse, un seul caisson présentant une première paroi latérale qui s'étend en regard dudit groupe moteur et une seconde paroi latérale opposée et ladite pièce rigide est montée dans ledit caisson de façon que les ailes soient solidaires de ladite première paroi latérale et que ladite partie centrale soit située en regard de ladite seconde paroi. Ainsi, lors d'un choc frontal, le caisson commence par se comprimer légèrement dans la direction longitudinale, et notamment la première paroi latérale, ce qui a pour effet d'entraîner immédiatement en flambage ladite pièce rigide dont la partie centrale, en appui contre la surface interne de la seconde paroi latérale, tend à l'entraîner à force dans la direction opposée au groupe moteur.

De la sorte, la pièce rigide force le pliage de la partie avant par rapport à la partie arrière vers l'extérieur du compartiment moteur, alors que sans cette action de la pièce rigide, le longeron aurait tendance à être entraîné longitudinalement vers l'habitacle.

Ledit longeron comprend en outre, et de façon particulièrement avantageuse, une extrémité compressible longitudinalement, formant tête de longeron adaptée à coopérer avec ladite seconde extrémité inclinée qui est elle-même déformable longitudinalement et dont elle est solidaire. Ainsi, dès que ladite tête de longeron est sollicité longitudinalement, bien quelle se contracte pour absorber une partie de l'impact, l'amorçage du pliage des deux parties s'effectue grâce à l'entraînement de la pièce rigide en V.

En outre, le longeron comprend, de manière préférentielle, une zone d'amorce de pliage située entre ladite partie avant et ladite partie arrière, afin que le pliage du longeron s'effectue précisément entre la partie arrière et la partie avant à un endroit prédéterminé.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective et en écorché de l'avant d'un véhicule automobile laissant apparaître un longeron conforme à l'invention ;
- la Figure 2 est une vue schématique en élévation de dessus d'une partie du longeron représenté sur la Figure 1 ;
- la Figure 3 est une vue schématique en perspective illustrant un élément représenté sur la Figure 2 ;
- la Figure 4 est une vue schématique en élévation de dessus d'une partie du longeron telle qu'illustrée sur la Figure 2 après transformation ; et,
- la Figure 5 est une vue schématique du longeron illustré sur la Figure 2 selon une variante de réalisation.

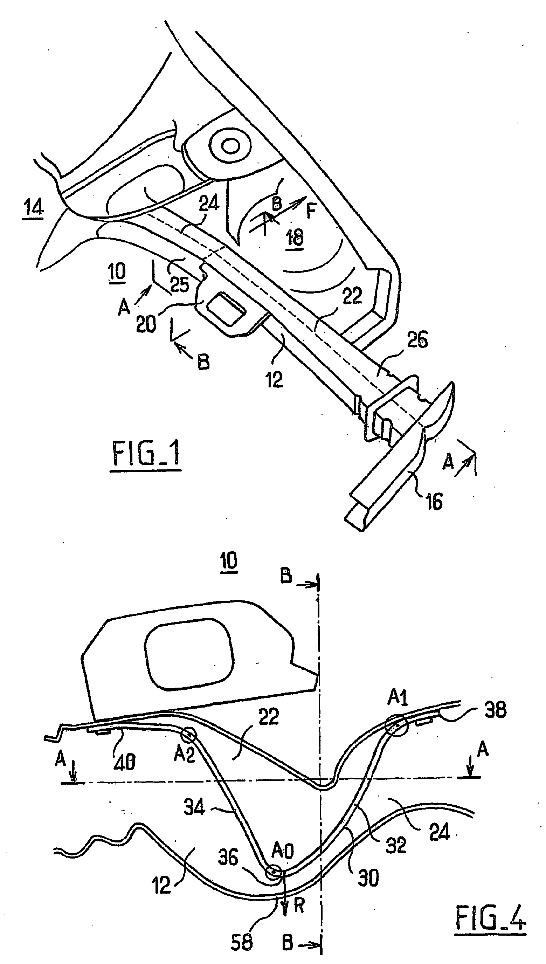

La Figure 1 montre l'avant d'un véhicule automobile en écorché, sur laquelle apparaissent, un compartiment moteur 10 et l'un des longerons 12 qui s'étend longitudinalement de l'habitacle 14 du véhicule jusqu'au pare-choc 16 qu'il supporte. En outre, le longeron 12 borde, vers l'extérieur du compartiment moteur 10 le passage de roue 18 du véhicule et vers l'intérieur le groupe moteur qu'il est adapté à supporter, notamment au moyen de l'attache 20.

Par ailleurs, le longeron 12 forme un caisson longitudinal, généralement réalisé par assemblage de deux profilés en U et il présente une partie avant 22 qui est reliée à l'habitacle par une partie arrière 24. En outre ledit caisson longitudinal présente une première paroi latérale 25 qui s'étend en regard du groupe moteur. La partie avant 22 comprend une extrémité compressible longitudinalement 26, formant tête de longeron .qui est reliée au pare-choc 16.

Lorsque le véhicule automobile subit une choc frontal, et que le longeron 12 tend à être entraîné longitudinalement dans la direction de l'habitacle, ce qui est dangereux pour les passagers, l'extrémité compressible 26 absorbe tout d'abord une partie de l'énergie cinétique lié au choc en se rétractant longitudinalement. Ensuite, grâce à l'objet de l'invention que l'on décrira ci-après, une autre partie de cette énergie provoque le pliage de la partie avant 22 par rapport à la partie arrière 24, latéralement vers l'extérieur du compartiment moteur 10 selon F. En effet, le pliage du longeron 12 vers le compartiment moteur serait également dangereux puisqu'il tendrait à entraîner le groupe moteur vers l'habitacle.

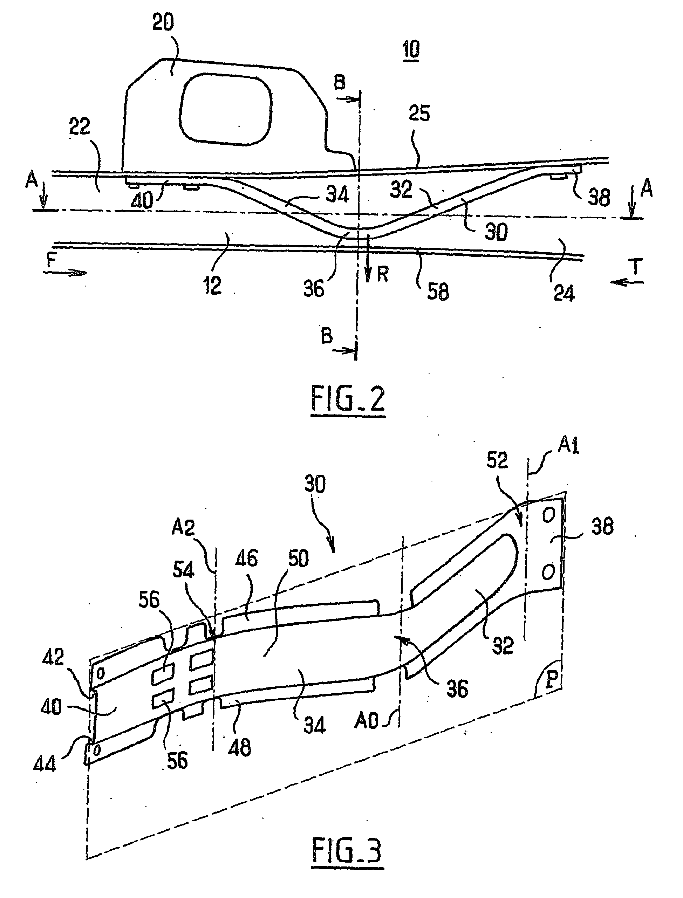

On décrira en référence aux Figures 2 et 3 en détail l'objet de l'invention.

La Figure 3 montre en perspective une pièce rigide en V 30 présentant une première 32 et une seconde 34 ailes, la jonction entre les deux ailes 32, 34 qui correspond à une partie centrale 36, est en saillie par rapport à un plan moyen P défini par une première 38 et une seconde 40 extrémités respectivement de la première et de la seconde ailes 32, 34. Les première et seconde extrémités 38, 40, s'étendent longitudinalement dans des directions opposées l'une de l'autre dans le plan moyen P qu'elles définissent en formant une inclinaison respectivement avec les première et seconde ailes 32, 40.

La pièce rigide en V 30 est réalisée avantageusement par emboutissage d'une seule plaque d'un matériau métallique. L'emboutissage permet, à la fois de lui conférer la forme en V et de ménager deux épaulements longitudinaux 42, 44 délimitant deux bords libres opposés 46, 48 en saillie d'une portion centrale 50.

Ainsi, la pièce rigide en V 30 présente une section droite en auge destinée à lui conférer une plus grande résistance à la déformation. Toutefois, la partie centrale 36 et les jonctions respectives 52, 54 de la première aile 32 et extrémité 38 et de la seconde aile 34 et extrémité 40 sont dépourvues d'épaulement. De la sorte, d'une part les deux ailes 32, 34 sont susceptibles d'être pliées .à force l'une vers l'autre et de façon privilégiée, selon un axe A0 qui s'étend dans la partie centrale 36 sensiblement perpendiculairement aux deux ailes 32, 34 et d'autre part, les deux extrémités 38, 40 sont respectivement adaptées à être pliées à force par rapport aux première et seconde ailes 32, 34, également de façon privilégiée, selon les axes A1 et A2. Ainsi, les jonctions 52, 54 et la partie centrale, sont adaptées à former rotule.

En outre, la seconde extrémité 40, présente des évidements 56 ou de façon additionnelle ou alternative des plissements longitudinaux non représentés, permettant une déformation longitudinale à force.

On se référera maintenant à la Figure 2, pour décrire le longeron 12 dans lequel est montée la pièce rigide en V 30.

On retrouve sur cette Figure 2, la partie avant 22 et la partie arrière 24 du longeron 12 ainsi que la première paroi latérale 25 qui apparaît en regard d'une seconde paroi latérale 58.

La pièce rigide en V 30 est montée longitudinalement dans le longeron 12, la première extrémité 38 étant reliée à la première paroi latérale 25 dans la partie arrière 24 du longeron 12 par des rivets ou des moyens vissables ou encore par soudure, et la seconde extrémité 40 étant reliée également à la première paroi latérale 25 mais dans la partie avant 22 du longeron 12, tandis que la partie centrale 36 est étendue en regard de la seconde paroi latérale 58 sensiblement entre lesdites parties avant 22 et arrière 24. En outre, la partie centrale 36 est espacée de la seconde paroi latérale 58 de façon à constituer un jeu latéral.

Ainsi, dès lors que le longeron 12 subit une déformation longitudinale selon les forces F et T opposées l'une de l'autre et comprises dans le plan A-A, la première paroi latérale 25 dont les deux extrémités. 38, 40 de la pièce rigide en V 30 sont solidaires, les entraîne l'une vers l'autre et contraint la pièce rigide en V 30, ce qui provoque le déplacement transversal selon le plan B-B dans la direction R, de la partie centrale 36 vers la seconde paroi latérale 58.

Grâce audit jeu latéral, une grande partie de l'énergie produite par le choc frontal est susceptible d'être transmise à la pièce rigide en V 30 qui n'est pas immédiatement en contact avec la paroi latérale 58 et qui est donc moins résistante. Ainsi, la partie centrale 36 percute la paroi latérale 58 avec une plus grande puissance ce qui facilite sa déformation.

Par ailleurs, lors du montage, l'assemblage des différentes parois du longeron 12 doit pouvoir être réalisé sans rencontrer de point gênant généré par la partie centrale 36.

En outre, le battement de la pièce en V 30 dû aux vibrations ne doit pas engendrer de nuisance sonore par contact avec le longeron.

Plus précisément, les première 38 et seconde 40 extrémités sont entraînées, sensiblement en translation, l'une vers l'autre tandis qu'elles pivotent respectivement par rapport aux première 32 et seconde 34 ailes autour des axes respectifs A1 et A2 ; les ailes 32, 34, pivotant également l'une vers l'autre autour de l'axe A0.

Cette déformation longitudinale, se produit lorsque le véhicule automobile subit un choc frontal. Durant le choc, c'est tout d'abord l'extrémité compressible 26 qui se rétracte avec l'extrémité 40 de la pièce rigide en V 30 qui est également susceptible de se rétracter grâce aux évidements 56.

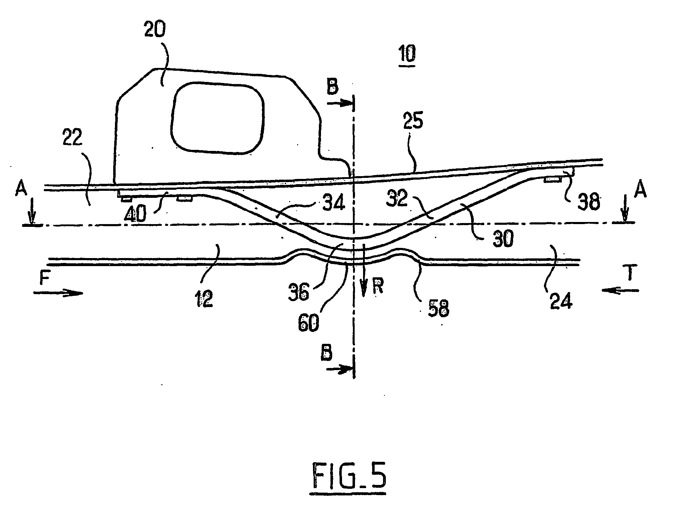

De la sorte, comme le montre la Figure 4, après que le longeron 12 a été comprimé longitudinalement, la partie avant 22 et la partie arrière 24 ont été pliées l'une par rapport à l'autre dans une direction opposée au compartiment moteur 10, grâce à la pièce rigide en V 30 dont la partie centrale 36, en prenant appui contre la seconde paroi latérale 58 l'a entraînée à force selon R.

Ainsi, la pièce rigide en V 30 induit dans le longeron 12 des directions de déformation privilégiées, en dehors de l'habitacle 14 et du compartiment moteur 10 sans qu'il soit nécessaire de prévoir des éléments d'appui du longeron 12 sur-dimensionnés adaptés à le pré-contraindre.

Selon une variante de réalisation particulièrement avantageuse, illustrée sur la Figure 5 et dans laquelle on retrouve un longeron avec tous les éléments représentés sur la Figure 2, la paroi latérale 58 présente une zone de contact 60 emboutie en regard de la partie centrale 36 adaptée à recevoir ladite partie centrale 36 et à la bloquer. La zone de contact 60 emboutie forme une paroi interne concave dans laquelle la partie centrale 36 est susceptible de venir s'engager en cas de choc et d'être au moins partiellement bloquée en translation. Cette zone de contact 60 bloquante, forme ainsi une zone d'accroche d'appui de la partie centrale 36 permettant de guider la partie centrale 36 et de la rendre au moins partiellement solidaire de la paroi latérale 58.

Par ailleurs, deux longerons conformes à l'invention, un a droite et l'autre à gauche, sont adaptés à être montés sur un véhicule automobile.

De la sorte, les éléments d'appui sont susceptibles d'être allégés, ce qui permet d'alléger également le véhicule et ce, quand bien-même le longeron 12 serait pourvu d'une amorce de pliage entre les parties avant et arrière et d'une équerre interne de renfort.

## Revendications

1. Longeron pour véhicule automobile s'étendant dans un compartiment moteur (10) en bordant latéralement le groupe moteur qu'il est adapté à supporter, ledit longeron (12) présentant une partie avant (22) qui est reliée à l'habitacle (14) dudit -véhicule par une partie arrière (24), ledit longeron (12) comportant des moyens d'asservissement au pliage de ladite partie arrière (24) par rapport à ladite partie avant (22) dans une direction opposée audit groupe moteur; lorsque ladite partie avant (22) est percutée longitudinalement,
**caractérisé en ce que** lesdits moyens d'asservissement au pliage comprennent une pièce rigide en V (30), présentant deux ailes (32, 34) et une partie centrale (36) en saillie à la jonction des deux ailes (32, 34), adaptée à former rotule centrale, l'une des ailes (34) étant solidaire de ladite partie avant (22) et l'autre (32) de ladite partie arrière (24), ladite partie centrale (36) étant étendue en regard dudit longeron (12), sensiblement entre ladite partie avant (22) et ladite partie arrière (24) dans une direction opposée audit groupe moteur ;
et **en ce que** ladite partie centrale (36) est adaptée à entraîner à force ledit longeron (12) pour plier ladite partie avant (22) par rapport à ladite partie arrière (24) dans une direction opposée audit groupe moteur lorsque le longeron (12) est comprimé longitudinalement.

2. Longeron pour véhicule automobile selon la revendication 1, **caractérisé en ce que** lesdites ailes (32, 34) de ladite pièce rigide (30) comportent respectivement une première (38) et une seconde (40) extrémités opposées à ladite partie centrale (36), la première extrémité (38) étant reliée à ladite partie arrière (24) et la seconde extrémité (40) étant reliée à ladite partie avant (22).

3. Longeron pour véhicule automobile selon la revendication 2, **caractérisé en ce que** lesdites extrémités (38, 40) sont inclinées par rapport auxdites ailes (32, 34) de façon que les jointures respectives entre lesdites ailes (32, 34) et lesdites extrémités (38, 40) soient adaptées à former respectivement, une première et une seconde rotules, lesdites extrémités inclinées (38, 40) s'étendant dans des directions opposées dans le prolongement l'une de l'autre.

4. Longeron pour véhicule automobile selon la revendication 2 ou 3, **caractérisé en ce que** la seconde extrémité inclinée (40) présente des portions de plus faible résistance mécanique adaptées à la rendre compressible longitudinalement.

5. Longeron pour véhicule automobile selon l'une quelconque des revendications 1 à 4, **caractérisé en ce qu'**il forme un seul caisson présentant une première paroi latérale (25) qui s'étend en regard dudit groupe moteur et une seconde paroi latérale (58) opposée et **en ce que** ladite pièce rigide (30) est montée dans ledit caisson de façon que les ailes (32, 34) soient solidaires de ladite première paroi latérale (25) et que ladite partie centrale (36) soit située en regard de ladite seconde paroi (58).

6. Longeron pour véhicule automobile selon la revendication 5, **caractérisé en ce que** ladite partie centrale (36) est espacée de la seconde paroi latérale (58) de façon à former un jeu latéral.

7. Longeron pour véhicule automobile selon la revendication 5 ou 6, **caractérisé en ce que** ladite seconde paroi latérale (58) présente une zone de contact bloquante (60) adaptée à recevoir ladite partie centrale (36) lors d'un choc pour la bloquer.

8. Longeron pour véhicule automobile selon l'une- quelconque des revendications 5 à 7, **caractérisé en ce que** ladite partie avant (22) comprend une extrémité compressible (26) longitudinalement, formant tête de longeron.

9. Longeron pour véhicule automobile selon la revendication 8 et selon l'une quelconque des revendication 2 à 4, **caractérisé en ce que** ladite seconde extrémité inclinée (40) de ladite pièce rigide (30) est solidaire de ladite extrémité compressible (26) longitudinalement.

10. Longeron pour véhicule automobile selon l'une quelconque des revendications 1 à 9, **caractérisé en ce qu'**il comprend une zone d'amorce de pliage située entre ladite partie avant (22) et ladite partie arrière (24).

## Claims

1. Side member for a motor vehicle, extending into an engine compartment (10) along the side edge of the engine unit which it is adapted to support, the said side member (12) having a forward part (22) which is joined to the passenger compartment (14) of the said vehicle by a rear part (24), the said side member (12) having means for automatically bending the said rear part (24) with respect to the said forward part (22) in a direction away from the said motor unit, when the said forward part (22) is subjected to longitudinal impact,
**characterized in that** the said automatic bending means comprise a rigid V-shaped piece (30) having two branches (32, 34) and a projecting central part (36) at the junction of the two branches (32, 34), adapted to form a central bearing point, one of the branches (34) being fixed to the said forward part (22) and the other (32) being fixed to the said rear part (24), the said central part (36) being extended facing the said side member (12), substantially between the said forward part (22) and the said rear part (24), in a direction away from the said engine unit;
and **in that** the said central part (36) is adapted to forcibly push the said side member (12) so as to bend the said forward part (22) with respect to the said rear part (24) in a direction away from the said engine unit when the side member (12) is compressed longitudinally.

2. Side member for a motor vehicle according to Claim 1, **characterized in that** the said branches (32, 34) of the said rigid part (30) have, respectively, a first end (38) and a second end (40), these being on opposite sides of the said central part (36), the first end (38) being joined to the said forward part (24) and the second end (40) being joined to the said forward part (22).

3. Side member for a motor vehicle according to Claim 2, **characterized in that** the said ends (38, 40) are inclined with respect to the said branches (32, 34) in such a way that the respective junctions between the said branches (32, 34) and the said ends (38, 40) are adapted to form, respectively, a first and a second bearing point, the said inclined ends (38, 40) extending in opposite directions, each in the extension of the other.

4. Side member for a motor vehicle according to Claim 2 or 3, **characterized in that** the second inclined end (40) has portions having lower mechanical strength adapted to make them longitudinally compressible.

5. Side member for a motor vehicle according to any one of Claims 1 to 4, **characterized in that** it forms a single box having a first side wall (25) which extends facing the said engine unit and a second opposite side wall (58), and **in that** the said rigid part (30) is mounted in the said box in such a way that the branches (32, 34) are fixed to the said first side wall (25) and that the said central part (36) is located facing the said second wall (58).

6. Side member for a motor vehicle according to Claim 5, **characterized in that** the said central part (36) is spaced apart from the second side wall (58) so as to create a lateral clearance.

7. Side member for a motor vehicle according to Claim 5 or 6, **characterized in that** the said second side wall (58) has a locking contact area (60) adapted to receive the said central part (36) and lock it if an impact occurs.

8. Side member for a motor vehicle according to any one of Claims 5 to 7, **characterized in that** the said forward part (22) comprises a longitudinally compressible end (26), forming a head of the side member.

9. Side member for a motor vehicle according to Claim 8 and according to any one of Claims 2 to 4, **characterized in that** the said second inclined end (40) of the said rigid part (30) is fixed to the said longitudinally compressible end (26).

10. Side member for a motor vehicle according to any one of Claims 1 to 9, **characterized in that** it comprises a bend initiation area located between the said forward part (22) and the said rear part (24).

## Patentansprüche

1. Längsträger für ein Kraftfahrzeug, der sich in einem Motorraum (10) erstreckt, indem er den Motorblock seitlich umrandet, den er stützen kann, wobei der Längsträger (12) einen vorderen Bereich (22) aufweist, der mit dem Fahrgastraum (14) des Fahrzeugs über einen hinteren Bereich (24) verbunden ist, wobei der Längsträger (12) Mittel zur Anpassung an die Krümmung des hinteren Bereichs (24) bezüglich des vorderen Bereichs (22) in einer zum Motorblock entgegengesetzten Richtung aufweist, wenn der vordere Bereich (22) in Längsrichtung eine Aufprall erfährt,
**dadurch gekennzeichnet, dass** die Mittel zur Anpassung an die Krümmung ein steifes V-förmiges Bauteil (30) aufweisen, das zwei Schenkel (32, 34) und einen mittleren Bereich (36) aufweist, der an der Verbindung der zwei Schenkel (32, 34) vorsteht und geeignet ist, ein mittleres Kugelgelenk zu bilden, wobei einer der Schenkel (34) fest mit dem vorderen Bereich (22) und der andere (32) mit dem hinteren Bereich (24) verbunden ist, wobei der mittlere Bereich (36) sich gegenüber dem Längsträger (12) im Wesentlichen zwischen dem vorderen Bereich (22) und dem hinteren Bereich (24) in einer zum Motorblock entgegengesetzten Richtung erstreckt;
und dass der mittlere Bereich (36) geeignet ist, um den Längsträger (12) unter Krafteinwirkung anzutreiben, um den vorderen Bereich (22) bezüglich des hinteren Bereichs (24) in einer Richtung entgegengesetzt zum Motorblock zu krümmen, wenn der Längsträger(12) in Längsrichtung zusammengedrückt wird.

2. Längsträger für ein Kraftfahrzeug nach Anspruch 1, **dadurch gekennzeichnet, dass** die Schenkel (32, 34) des steifen Bauteils (30) ein erstes (38) bzw. ein zweites Ende (40) aufweisen, die dem mittleren Bereich (36) entgegengesetzt liegen, wobei das erste Ende (38) mit dem hinteren Bereich (24) und das zweite Ende (40) mit dem vorderen Bereich (22) verbunden ist.

3. Längsträger für ein Kraftfahrzeug nach Anspruch 2, **dadurch gekennzeichnet, dass** die Enden (38, 40) bezüglich der Schenkel (32, 34) so geneigt sind, dass die Verbindungsstellen zwischen den Schenkeln (32, 34) und den Enden (38, 40) geeignet sind, um ein erstes bzw. ein zweites Kugelgelenk zu bilden, wobei die geneigten Enden (38, 40) sich in gegenseitiger Verlängerung in entgegengesetzte Richtungen erstrecken.

4. Längsträger für ein Kraftfahrzeug nach Anspruch 2 oder 3, **dadurch gekennzeichnet, dass** das zweite geneigte Ende (40) Abschnitte mit geringerem mechanischen Widerstand aufweist, die geeignet sind, um es in Längsrichtung zusammendrückbar zu machen.

5. Längsträger für ein Kraftfahrzeug nach einem der Ansprüche 1 bis 4, **dadurch gekennzeichnet, dass** er einen einzigen Kasten bildet, der eine erste Seitenwand (25), die sich gegenüber dem Motorblock erstreckt, und eine zweite, entgegengesetzte Seitenwand (58) aufweist, und dass das steife Bauteil (30) so in den Kasten montiert ist, dass die Schenkel (32, 34) fest mit der ersten Seitenwand (25) verbunden sind und dass der mittlere Bereich (36) sich gegenüber der zweiten Wand (58) befindet.

6. Längsträger für ein Kraftfahrzeug nach Anspruch 5, **dadurch gekennzeichnet, dass** der mittlere Bereich (36) einen Abstand von der zweiten Seitenwand (58) hat, um einen seitlichen Spielraum zu bilden.

7. Längsträger für ein Kraftfahrzeug nach Anspruch 5 oder 6, **dadurch gekennzeichnet, dass** die zweite Seitenwand (58) eine blockierende Kontaktzone (60) aufweist, die geeignet ist, um den mittleren Bereich (36) bei einem Stoß aufzunehmen, um ihn zu blockieren.

8. Längsträger für ein Kraftfahrzeug nach einem der Ansprüche 5 bis 7, **dadurch gekennzeichnet, dass** der vordere Bereich (22) ein in Längsrichtung zusammendrückbares Ende (26) aufweist, das den Kopf des Längsträgers bildet.

9. Längsträger für ein Kraftfahrzeug nach Anspruch 8 und nach einem der Ansprüche 2 bis 4, **dadurch gekennzeichnet, dass** das zweite geneigte Ende (40) des steifen Bauteils (30) fest mit dem in Längsrichtung zusammendrückbaren Ende (26) verbunden ist.

10. Längsträger für ein Kraftfahrzeug nach einem der Ansprüche 1 bis 9, **dadurch gekennzeichnet, dass** er eine Krümmungsanfangszone aufweist, die sich zwischen dem vorderen Bereich (22) und dem hinteren Bereich (24) befindet.
